Europäisches Patentamt

European Patent Office

Office européen des brevets

(11) Numéro de publication : **0 126 699**
**B1**

(12) **FASCICULE DE BREVET EUROPÉEN**

(45) Date de publication du fascicule du brevet :
09.11.88

(51) Int. Cl.⁴ : **G 07 F 7/10**, G 06 K 19/06

(21) Numéro de dépôt : 84420084.0

(22) Date de dépôt : 10.05.84

(54) **Dispositif d'identification électronique.**

(30) Priorité : 11.05.83 FR 8308099
16.06.83 FR 8310201

(43) Date de publication de la demande :
28.11.84 Bulletin 84/48

(45) Mention de la délivrance du brevet :
09.11.88 Bulletin 88/45

(84) Etats contractants désignés :
AT BE CH DE FR GB IT LI LU NL SE

(56) Documents cités :
EP-A- 0 044 039
FR-A- 2 266 222
FR-A- 2 353 103
FR-A- 2 374 702
FR-A- 2 471 000
FR-A- 2 503 423
FR-A- 2 513 408

(73) Titulaire : Savoyet, Jean-Louis Paul Jules
La Mayrie
F-38770 La Motte d'Aveillans (FR)

Molé, Alain Marie-Louis
138, avenue Ambroise-Croizat
F-38400 Saint-Martin d'Hères (FR)

(72) Inventeur : Savoyet, Jean-Louis Paul Jules
La Mayrie
F-38770 La Motte d'Aveillans (FR)
Inventeur : Molé, Alain Marie-Louis
138, avenue Ambroise-Croizat
F-38400 Saint-Martin d'Hères (FR)

(74) Mandataire : Kremer, Robert A.M. et al
BUREAU D.A. CASALONGA OFFICE JOSSE & PETIT
Morassistrasse 8
D-8000 München 5 (DE)

## Description

La présente invention concerne un dispositif d'identification électronique, par exemple d'une personne en vue de la commande d'un appareil.

Les dispositifs d'identification de personnes ont de nombreuses applications, par exemple pour l'ouverture de portes, la gestion d'horaires, la gestion d'appareils utilisés par plusieurs personnes tels que les appareils à photocopier ou encore pour la distribution automatique d'argent contre quittance, ceci sans intervention de personnel de guichet.

Dans certains dispositifs d'identification, on utilise une partie amovible qui porte un code d'identification, qui se présente sous la forme d'un badge et que la personne à identifier transporte avec elle.

Le code d'identification peut être matérialisé, dans le badge, par des perforations ou par une bande magnétique ce qui, outre la complexité de l'appareil de lecture, permet une détection facile du code d'identification par une personne mal intentionnée.

Dans d'autres dispositifs d'identification, on utilise une partie amovible sous forme d'une clé électronique qui comporte des moyens de mémorisation d'un code d'identification qui peut être détecté et reconnu par un appareil de lecture analogue à une serrure, mais qui fonctionne électroniquement (voir par exemple le brevet américain N° 4 038 637).

Le brevet français 2 266 222 décrit un dispositif d'identification électronique interdisant l'accès au dispositif lorsque le résultat d'une comparaison est négatif. Le brevet français 2 471 000 décrit un système de ce type utilisant en outre un clavier d'introduction de données.

Dans le brevet français n° 2 363 837, on utilise une clé à mémoire programmable dans lequel le code d'identification peut être contenu dans un registre à décalage logé dans la clé. Les informations contenues dans la clé peuvent être lues par la serrure électronique au moyen d'impulsions fournies par une horloge se trouvant dans ladite serrure. Les informations ainsi obtenues sont comparées avec un code mémorisé dans la serrure de façon à déterminer l'identité des deux codes et la commande par exemple de l'ouverture d'une gâche.

Dans ce dispositif cependant, le risque est grand d'une duplication frauduleuse de la clé électronique dont la lecture du registre à décalage permettant la détermination du code d'identification est relativement facile pour un technicien au courant de ce dispositif.

Différents perfectionnements ont été également apportés à ce dispositif, pour rendre plus difficile la détection frauduleuse du code d'identification, tels par exemple que modifications aléatoires du code, simultanément dans la clé et la serrure. Bien que rendant la détection frauduleuse beaucoup plus difficile, ces moyens ne l'excluent pas cependant.

On connaît par le brevet européen n° 37566 un dispositif d'identification de ce type dans lequel le code mémorisé n'est cependant pas détruit lors d'une ou plusieurs tentatives infructueuses.

De la même manière, dans le document EP-A-44039 sont simplement prévus des moyens d'invalidation mis en œuvre dans le cas d'une succession ininterrompue de tentatives infructueuses de lecture du code contenu dans une mémoire préprogrammée.

Enfin le brevet français 2 353 103 prévoit la destruction d'un code contenu dans une mémoire préprogrammée après une comparaison infructueuse du code se trouvant dans la clé avec un code interne se trouvant dans la serrure.

L'invention a pour but l'établissement d'un dispositif d'identification électronique de code, comprenant une partie mobile et une partie fixe, dans lequel une tentative frauduleuse d'utilisation conduit à la destruction du code contenu dans la partie mobile, cette destruction résultant d'un défaut dans le fonctionnement initial du système au cours duquel on procède à une modification déterminée du contenu de la clé.

L'invention a aussi pour but l'utilisation d'un clavier pouvant être associé à la partie fixe du dispositif, pour permettre au porteur de la partie mobile de quittancer l'opération d'actionnement de la partie fixe.

Le dispositif d'identification électronique de l'invention comprend une partie mobile ayant une zone de mémoire passive préprogrammée renfermant un code électronique d'identification sous la forme de l'état d'une pluralité d'interrupteurs à fusible, connectée à une mémoire pouvant être lue et une partie fixe à laquelle la partie mobile peut être couplée. La partie fixe comprend : des moyens d'alimentation en courant électrique ; des moyens électroniques de chargement pour fournir au moins une impulsion de chargement provoquant le chargement du code électronique d'identification dans la mémoire pouvant être lue ; des moyens électroniques de lecture pour lire le contenu de la mémoire pouvant être lue de la partie mobile et le transférer dans une seconde mémoire de la partie fixe ; des moyens de comparaison pour comparer ledit contenu avec un code se trouvant dans la partie fixe ; et des moyens de transfert pour fournir à la partie mobile, avant l'opération effective de lecture, un nombre déterminé d'impulsions préliminaires. La partie mobile comprend des moyens de modification recevant lesdites impulsions préliminaires et capables de provoquer, pour chacune de ces impulsions préliminaires, une modification du contenu de la mémoire pouvant être lue de la partie mobile. Le dispositif comporte en outre des moyens de destruction du code électronique d'identification après un nombre déterminé d'essais infructueux, ces moyens de destruction étant conçus pour réagir à un nombre erroné d'impulsions préliminaires appliquées à la partie mobile pour procéder à la modification du contenu de la mémoire de la partie mobile avant l'opération effective de lecture.

L'invention sera mieux comprise à l'étude d'un mode de réalisation pris à titre d'exemple nullement limitatif et illustré par les dessins annexés, sur lesquels :

— la figure 1 représente les principaux éléments de la partie fixe ou serrure d'un dispositif d'identification prévu pour la commande de la gâche d'une porte ; et

— la figure 2 représente schématiquement la partie mobile ou clé électronique destinée à être accouplée à la partie fixe représentée à la figure 1 ;

Les figures 3 à 10 illustrent différentes variantes de la forme d'exécution décrite en regard des figures 1 et 2.

Les figures 11 à 14 illustrent d'autres variantes encore.

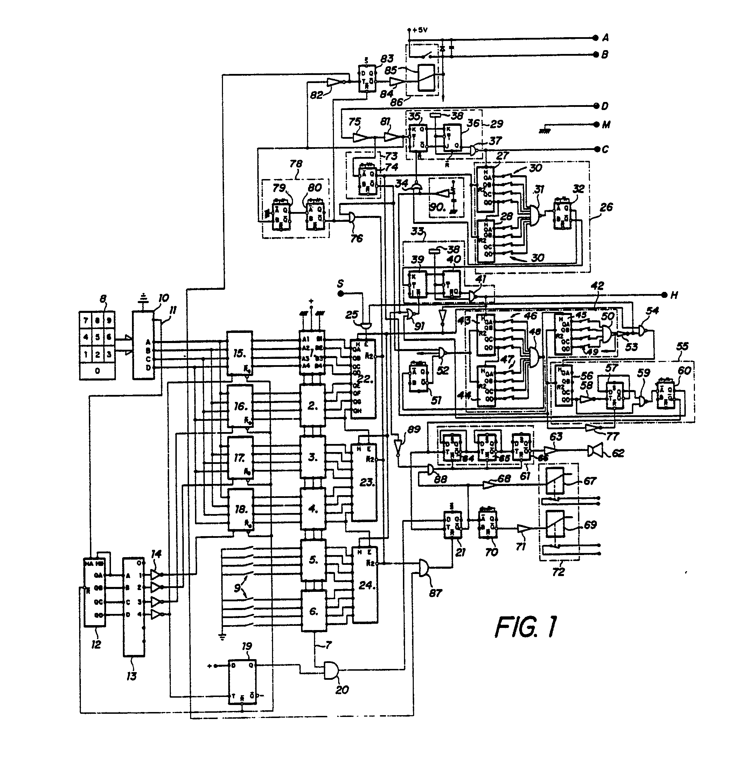

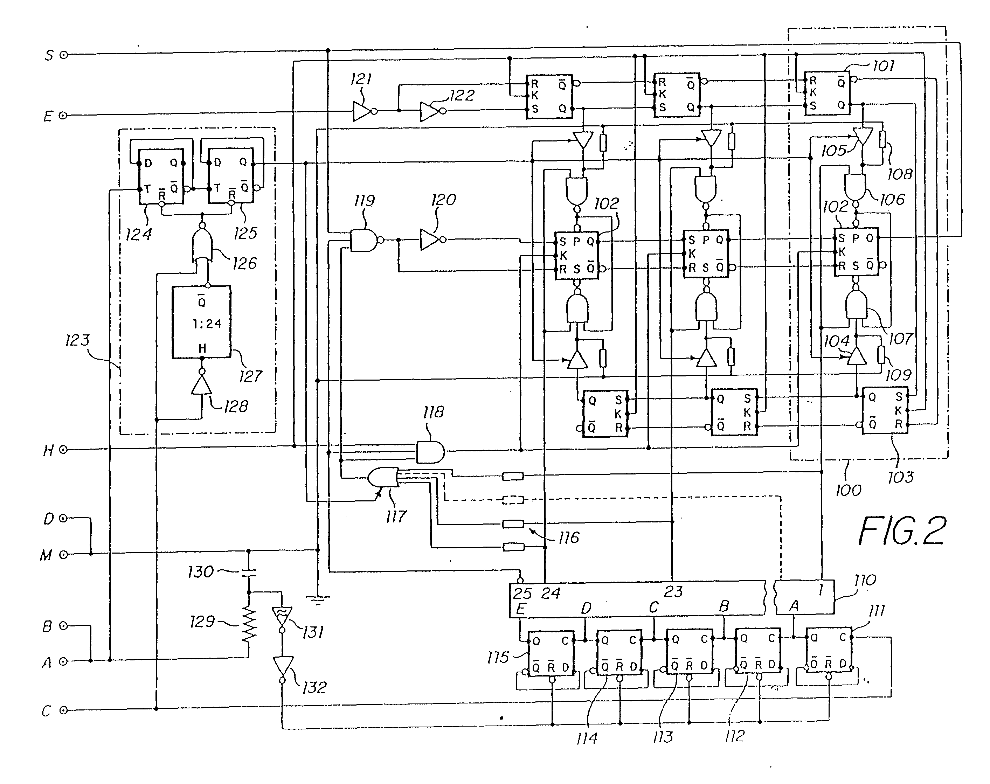

Avant de décrire en détail la partie fixe selon la figure 1 et la partie mobile selon la figure 2, nous allons décrire brièvement la manière de coopérer de ces deux parties.

La serrure comprend deux bornes A, B destinées, lors de l'insertion de la clé dans la serrure, à venir en contact avec deux bornes A, B de la clé. Les deux bornes A, B de la clé sont reliées entre elles et court-circuitent les bornes correspondantes de la serrure qui sait alors qu'une clé a été insérée et qui va mettre sous tension les bornes A, B de la clé, celle-ci étant dépourvue de source d'énergie.

La serrure comprend également une borne de masse M destinée à venir coopérer avec une borne de masse M de la clé, les masses de serrure et clé étant ainsi reliées, et une borne de départ D qui sera mise à la masse commune par la borne correspondante D de la clé, lors de l'insertion de celle-ci dans la serrure.

Pour synchroniser les opérations de la clé et de la serrure, cette dernière comprend une horloge qui va appliquer des impulsions d'horloge à la clé par l'intermédiaire d'une borne H de la clé.

Enfin, la serrure comprend encore une borne de chargement C par laquelle la serrure va donner à la clé, par l'intermédiaire d'une borne correspondante C de celle-ci, l'ordre de transférer le code qu'elle renferme dans la serrure, afin d'effectuer, au sein de celle-ci, une opération de comparaison de code. Ce transfert de code s'effectue par les bornes correspondantes S.

Enfin, la clé comprend une borne E qui n'a pas de correspondant sur la serrure et qui est simplement destinée à introduire dans la clé le code attribué au porteur de celle-ci.

Les codes à comparer étant de 24 bits dans notre exemple, la serrure comprend une série de six comparateurs 1-6 de quatre bits chacune le résultat de la comparaison apparaissant à la sortie 7 du comparateur 6. Sur les 24 bits, 16 bits vont être introduits par un clavier 8 et 8 bits par autant d'interrupteurs 9.

Le système à clavier comprend, outre le clavier 8 un circuit codeur 10. Le code B C D (binaire codé décimal) du chiffre actionné se place sur les quatre bornes A, B, C, D du codeur 10. Une impulsion émise par une borne 11 du codeur 10 prévient que les données sont prêtes, un compteur 12 étant activé par cet ordre qui décodé par l'élément 13 et des inverseurs 14, fait prendre en charge par une mémoire tampon 15 le premier chiffre qui se positionne sur la voie $A_1$-$A_4$ du comparateur 1. Un second chiffre est appelé qui se met en position de la même manière sur la voie $A_1$-$A_4$ du comparateur 2 par l'intermédiaire d'une mémoire tampon 16 et ainsi de suite jusqu'au 4e chiffre et ce à l'aide de mémoires tampons 17, 18. Une autorisation de contrôle est alors envoyée à une bascule 19 qui permet à la porte 20 de laisser passer l'information venant de la borne 7 du comparateur 6. Si le résultat de la comparaison s'avère positif, une bascule 21 est actionnée, sinon il y a signe d'erreur et il faut recommencer l'opération. Il faut bien entendu que la clé ait été engagée avant de frapper le code.

Les voies $B_1$-$B_4$ des comparateurs 1 à 6 sont alimentées par les sorties $Q_A$-$Q_H$ de trois registres à décalage 22, 23, 24 alimentés eux-mêmes à partir de la borne S, d'une porte 25 et de l'entrée E du premier registre 22. On voit qu'ainsi le code d'identification contenu dans la clé selon la figure 2, est introduit en série dans les trois registres 22-24 pour être comparé avec le code présent dans la serrure.

La serrure comprend un circuit de modulation de chargement 26 constitué par deux compteurs 27, 28, le compteur 27 recevant sur son entrée H des impulsions de chargement émises par un circuit de chargement 29. Les sorties $Q_A$-$Q_D$ de ces deux compteurs 27, 28 sont reliées à deux groupes de quatre interrupteurs 30 reliés aux huit entrées d'une porte NON-ET 31. La sortie de la porte 31 est connectée à l'entrée $\bar{A}$ d'un monostable 32 dont la sortie $\bar{Q}$ est reliée à l'entrée d'un circuit de lecture 33. La sortie Q du monostable 32 est reliée, par l'intermédiaire d'une porte 34, à l'entrée de remise à zéro $\bar{R}$ d'une première bascule 35, du circuit de chargement, lequel comprend encore une seconde bascule 36, une porte 37 et un circuit d'horloge 38.

Quant au circuit de lecture 33, il comprend deux bascules 39, 40, une porte 41 et le circuit d'horloge 38 déjà mentionné. On voit que c'est le circuit de lecture 33 qui fournit à la borne H de la serrure les impulsions d'horloge.

La sortie du circuit de lecture 33 est en outre reliée à l'entrée d'un circuit de modulation d'horloge 42 qui comprend un ensemble de trois compteurs 43, 44, 45, quatre interrupteurs 46 pouvant être préprogrammés et reliés aux sorties $Q_A$, $Q_B$, $Q_C$, $Q_D$ du compteur 45, quatre interrupteurs 47 également préprogrammables et reliés aux sorties $Q_A$-$Q_D$ du compteur 44, une porte NON-ET 48 dont les huit entrées sont reliées aux huit interrupteurs et dont la sortie est reliée à l'entrée H du troisième compteur 45 dont les sorties coopèrent également avec quatre interrupteurs 49. Les quatre interrupteurs 49 sont reliés aux quatre entrées d'une porte NON-ET 50 que comprend encore le circuit de modulation d'horloge 42.

Il résulte de la disposition de ces différents moyens que la sortie de la porte 50 émet un signal après l'émission d'un nombre d'impulsions d'horloge ou impulsions de lecture par le circuit 33 qui dépend de la position des différents interrupteurs 46, 47, 49. Le nombre défini par les deux premiers compteurs 43, 44 correspond au nombre d'impulsions de lecture à l'intérieur d'un cycle, le nombre défini par le compteur 45 correspond au nombre de cycles. Le nombre total défini par l'ensemble du circuit de modulation 42 est le produit de ces deux nombres.

La sortie de la porte 48 est également reliée à l'entrée Ā d'un monostable 51, dont la sortie Q̄ est reliée à l'une des entrées d'une porte NON-ET 52 entraînant la remise à zéro des compteurs 43, 44 par leurs entrées R, lorsqu'un signal est émis par la porte 52. Ainsi, les deux premiers compteurs 43, 44 sont remis à zéro après chacun des cycles comptés par le troisième compteur 45.

Lorsque le nombre ainsi déterminé d'impulsions de lecture a été émis par le circuit de lecture 33, le signal de sortie de la porte 50, transmis par l'inverseur 53 apparaît à une entrée de la porte 25 dont l'autre entrée est reliée à la borne d'entrée S qui reçoit le signal de sortie de la clé. De cette manière, le code contenu dans la clé ne peut être introduit dans les registres à décalage 22, 23, 24 qu'après l'émission du nombre d'impulsions de lecture déterminé par le circuit de modulation d'horloge 42. La sortie de l'inverseur 53 est également appliquée à l'une des entrées d'une porte NON-ET 54 qui reçoit sur sa deuxième entrée les impulsions d'horloge émises par le circuit de lecture 33.

Autrement dit, après un nombre déterminé de permutations provoquées par les impulsions d'horloge dont le nombre est déterminé par les trois compteurs 43, 44 et 45, de nouvelles impulsions de lecture, toujours émises par le circuit de lecture 33 et passant par la porte 54, sont transmises à l'entrée d'un circuit d'arrêt de lecture 55. Ce dernier comprend un compteur 56 dont la sortie Q_D est reliée à l'entrée T d'une bascule 57 par l'intermédiaire d'un inverseur 58. Il comprend également une porte NON-ET 59 dont les entrées sont connectées respectivement à la sortie Q_D du compteur 56 et à la sortie Q de la bascule 57. La sortie de la porte 59 est appliquée à l'entrée Ā d'un monostable 60 qui provoque l'émission d'un signal arrêtant le circuit de lecture 33.

La serrure comprend encore un circuit d'autorisation d'essais successifs 61 dont la sortie est reliée à un dispositif d'alarme 62 par l'intermédiaire d'un driver 63, et qui sera actionné après quatre essais successifs infructeux. Ce circuit comprend trois bascules 64, 65 et 66 dont l'entrée T de la première est commandée par la sortie Q du circuit d'arrêt de lecture 55. La sortie du circuit d'arrêt de lecture 55 est également appliquée à l'entrée T de la porte 21 laquelle commande d'une part un relais 67 par l'intermédiaire d'un driver 68, ce relais 67 étant destiné à assumer une commande permanente et d'autre part un relais 69 par l'intermédiaire d'un monostable 70 et d'un driver 71, le relais 69 étant destiné à assumer une commande fugitive. L'ensemble 72 des deux relais 67, 69 constitue donc l'étage de puissance de la serrure, le relais 67 pouvant par exemple commander une gâche ou l'allumage d'un véhicule et le relais 69 un démarreur du véhicule.

La serrure comprend encore un premier circuit de remise à zéro 73, pourvu d'un monostable 74 recevant sur son entrée Ā le signal d'un temporisateur 75. Le monostable 74 réagit sur un signal présentant un front descendant c'est-à-dire lors de l'accouplement de la clé, en raison de la mise à la masse de la borne D. La sortie Q̄ du monostable 74 est reliée à l'une des entrées d'une porte ET 76 dont le signal de sortie provoque la remise à zéro des trois registres 22, 23 et 24. La sortie Q̄ du monostable 74 est également reliée à l'une des entrées de la porte 52 dont la sortie remet à zéro les compteurs 43 et 44. La sortie Q du monostable 74 sert à remettre à zéro les compteurs 27, 28 du circuit de modulation de chargement 26 et les compteurs 45, 56 et la bascule 57, cette dernière par l'intermédiaire d'un inverseur 77.

Un deuxième circuit de remise à zéro 78 provoque la remise à zéro de l'ensemble des bascules et des compteurs et la coupure du courant lorsque la clé est enlevée. Il comprend deux monostables 79, 80 montés en cascade, la sortie Q du monostable 79 étant reliée à l'entrée Ā du monostable 78. Le monostable 79 reçoit sur son entrée B le signal de sortie d'un temporisateur 81 et réagit sur un signal présentant un front montant c'est-à-dire lors du désaccouplement de la clé. La sortie Q̄ du monostable 80 qui fournit une impulsion très brève est reliée à l'autre entrée de la porte 76, qui provoque comme on l'a vu précédemment la remise à zéro des registres 22, 23 et 24. La sortie Q̄ du monostable 80 est également reliée à l'une des entrées de la porte 76.

Au moment du désaccouplement de la clé, le signal à la sortie du temporisateur 81 appliqué par l'intermédiaire d'un inverseur 82, à l'entrée T d'une bascule 83, provoque, par l'intermédiaire d'un amplificateur 84, le déclenchement d'un relais 85 d'un circuit d'alimentation 86 de sorte que l'alimentation est coupée. La bascule 83 est remise à zéro par son entrée R̄ reliée à la sortie Q̄ du monostable 80 lorsque la clé est désaccouplée de la serrure. Une porte ET 87 reçoit sur l'une de ses entrées le signal de l'inverseur 82 et sur l'autre entrée, le signal de la porte 76. Le signal de sortie de la porte 87 permet la remise à zéro de la bascule 21, au moment du désaccouplement de la clé après l'expiration du temps de temporisation du temporisateur 81.

Les bascules 64, 65 et 66 du circuit d'autorisation d'essais successifs 61 sont remises à zéro par une porte ET 88 dont l'une des entrées est alimentée par la sortie Q̄ de la bascule 21 et l'autre entrée par un inverseur 89 alimenté lui-même par un circuit 90, alimentant également la porte 34, ainsi qu'une porte 91 de remise à zéro de la bascule 39.

Avant de décrire le fonctionnement de la serrure selon la figure 1, nous allons décrire la clé représentée à la figure 2 et destinée à coopérer avec la serrure.

Elle comprend sept bornes, A, B, C, D, H, S, M destinées à venir s'engager avec les bornes de mêmes références de la serrure. Elle comprend en outre une borne E destinée à permettre l'introduction du code dans la clé. Il y a lieu de noter que la clé ne renferme aucune source de puissance, celle-ci étant fournie à la clé par la serrure, à l'aide des bornes A, B. La clé renferme un code ayant le même nombre de bits, soit vingt-quatre, pour lequel est prévue la serrure, ce code correspondant à autant de cellules 100, dont trois seulement ont été représentées. Ces cellules 100 sont reliées en cascade et comprennent chacune trois bascules R-S 101, 102, 103, deux drivers à trois états 104, 105 et deux portes NON-ET 106, 107. Enfin, elles comprennent chacune encore deux fusibles 108, 109 qui pourront être grillés selon le code désiré.

L'une des entrées de chacune des portes 106, 107 est commandée par une sortie 1-24 d'un décodeur 110 à cinq entrées A, B, C, D, E commandées par les sorties Q de cinq bascules 111-115 formant un registre à décalage. Les vingt-quatre sorties du décodeur 110 sont également reliées à l'une des bornes de vingt-quatre fusibles 116, dont les autres bornes sont reliées en parallèle à l'entrée d'une porte à trois états 117. La sortie de cette dernière alimente l'une des entrées d'une porte ET à trois entrées 118 dont la sortie est reliée en parallèle à toutes les entrées K des bascules 102 et une porte NON-ET à trois entrées 119 dont la sortie alimente l'entrée R de la bascule 102 de la cellule 100 reliée à la sortie n° 24 du décodeur 111 et, par l'intermédiaire d'un inverseur 120, l'entrée S de cette même bascule 102. La borne E est reliée à l'entrée R de la bascule 101 de la cellule 100 coopérant avec la borne 24 du convertisseur 110 par un inverseur 121 et à l'entrée S de cette même bascule, par un second inverseur 122.

La clé comprend encore un système 123 de limitation du nombre d'essais autorisés et qui, si ce nombre est dépassé, provoque la destruction de la clé.

Ce système 123 comprend un compteur formé de deux bascules 124, 125 l'entrée T de la bascule 124 étant relié aux bornes A, B de la clé et la borne de sortie Q de la bascule 125 à la commande des circuits à trois états 104, 105 et 117. Les bornes de remise à zéro des bascules 124, 125 sont commandées par une porte NON-OU 126 dont l'une des entrées est commandée par la borne de chargement C et l'autre par la sortie Q̄ d'un diviseur par vingt-quatre 127, dont l'entrée H est alimentée par un inverseur 128 dont l'entrée est reliée à la borne C.

Pour initialiser les bascules 111-115, la clé comprend encore un circuit intégrateur formé d'une résistance 129 et d'un condensateur 130, la résistance étant reliée aux bornes A, B et le point intermédiaire à deux éléments 131, 132 dont la sortie de l'élément inverseur 132 commande les bornes d'initialisation R̄ des bascules 111-114.

Le fonctionnement du dispositif d'identification représenté aux figures 1 et 2 est le suivant : lors de l'introduction de la clé dans la serrure, ces deux sont mis sous tension, les deux bornes A et B étant court-circuitées. Le circuit d'horloge 38 disposé dans la serrure émet une suite d'impulsions. Après un laps de temps déterminé par le temporisateur 75, un signal engendré par le monostable 74 produit une impulsion de remise à zéro des différents éléments de la serrure. La sortie du deuxième temporisateur délivre un signal qui provoque, après une deuxième temporisation, le début de l'émission par le circuit de chargement 29, d'impulsions négatives de chargement appliquées à la borne C. Ces impulsions apparaissent aux entrées du registre à décalage 111-115 qui va activer le décodeur 110 entraînant le chargement du registre à décalage que constituent ensemble les bascules 102 des cellules 100 ainsi que la modification de son contenu par l'intermédiaire des impulsions appliquées à travers les fusibles 116 sur l'élément OU à trois états 117 puis par la porte ET 118 sur les entrées de lecture K des bascules 102.

Les impulsions de chargement émises par le circuit 29 sont également appliquées à l'entrée du compteur 27, 28 que comprend le circuit 26 de modulation de chargement. Selon la position prédéterminée des interrupteurs 30, il est donc possible de provoquer l'émission d'un nombre déterminé d'impulsions de chargement. En effet, dès que ce nombre, déterminé par la position des différents interrupteurs 30 a été atteint, un signal est émis par la porte 31 et le monostable 32 qui provoque l'arrêt du circuit de chargement par l'intermédiaire de la porte 34.

Lors d'une tentative frauduleuse de reproduction par lecture de la clé, l'émission d'un nombre d'impulsions de chargement supérieur ou inférieur au nombre normal provoque une modification du contenu du registre à décalage formé par les bascules 102.

Après que le nombre déterminé d'impulsions de chargement ait été émis, le registre à décalage formé par les bascules 102 contient un code déterminé et le signal de sortie du circuit 26 émis par le monostable 32 provoque non seulement l'arrêt des impulsions de chargement, mais également le début de l'émission d'impulsions d'horloge par le circuit de lecture 33. Ces impulsions apparaissant sur la borne H permettent par l'intermédiaire de la porte 118, la lecture en série du contenu des différents éléments 102 du registre à décalage de la clé. Les impulsions de lecture sont comptées par le circuit d'arrêt de lecture 55 de façon à être égales dans l'exemple représenté à vingt-quatre, c'est-à-dire au nombre de bits du registre à décalage formé par les bascules 102.

Le signal série apparaissant sur la borne S et appliqué aux registres à décalage 22, 23 et 24 est comparé, dans les comparateurs 1-6 avec le code matérialisé en partie par les interrupteurs 9 et en partie par les sorties des mémoires tempons 15, 16, 17 et 18. Ces interrupteurs ont tous été représentés ouverts, mais il est bien entendu que certains d'entre eux sont en réalité fermés.

Lorsque la comparaison effectuée est positive, un signal de sortie est émis par le comparateur 6. Une impulsion est fournie par la bascule 21 qui permet la commande permanente du relais 67 et fugitive du relais 69.

On voit à la figure 2 que le registre à décalage formé par les bascules 102 est fermé sur lui-même, la sortie apparaissant à la borne S étant réinjectée par les portes 119 et 120 dans le premier élément 102 du registre. La sortie de la porte 50 du circuit de modulation d'horloge 42 émet un signal après l'émission d'un nombre d'impulsions d'horloge par le circuit 33 qui dépend de la position des différents interrupteurs 46, 47 et 49. Le nombre défini par les deux premiers compteurs 43, 44 correspond au nombre d'impulsions de lecture à l'intérieur d'un cycle. Le nombre défini par le compteur 45 correspond au nombre de cycles. Le nombre total défini par l'ensemble du circuit 42 est égal au produit de ces deux nombres. On voit également que les deux premiers compteurs 43, 44 sont remis à zéro après chacun des cycles comptés par le compteur 45.

Lorsque le nombre ainsi déterminé d'impulsions de lecture a été émis par le circuit de lecture 33, le signal de sortie de la porte 50 transmis par l'inverseur 53 apparaît sur la première entrée de la porte 25 dont la deuxième est connectée à la borne S qui reçoit le signal de sortie du registre de la·clé formé par les bascules 102. De cette manière, le contenu dudit registre ne peut être comparé qu'après l'émission du nombre d'impulsions de lecture déterminé par le circuit de modulation d'horloge 42.

La sortie de la porte 50 est également appliquée à l'une des entrées de la porte 54 qui reçoit sur sa deuxième entrée les impulsions d'horloge émises par le circuit 33.

Ainsi, après un nombre déterminé de permutations provoquées par les impulsions d'horloge dont le nombre est déterminé par les trois compteurs 43, 44 et 45 de nouvelles impulsions de lectures toujours émises par le circuit de lecture 33 et passant par la porte 54 sont transmises à l'entrée du circuit d'arrêt de lecture 55.

Le chargement du code d'identification matérialisé par les fusibles grillés et non grillés se fait au moyen d'un nombre déterminé d'impulsions de chargement émises par le circuit de chargement 29, la modification du code d'identification contenu dans le registre à décalage constitué par les bascules 102 se faisant lors de l'émission d'une impulsion sur la sortie 25 du décodeur 110. On obtient donc une modification du code contenu dans le registre à décalage en fonction du nombre d'impulsions de chargement.

Après l'émission du nombre convenable d'impulsions de chargement, le circuit de lecture 33 est mis en marche et un nombre d'impulsions déterminé par les trois compteurs 43, 44 et 45 est envoyé à la borne H. Chacune de ces impulsions provoque une permutation du contenu du registre à décalage constitué par les bascules 102. Il y a lieu de noter que pendant ces différentes permutations, le signal apparaissant sur la borne de sortie S n'est pas introduit dans les registres 22, 23 et 24 en raison de la porte 25 qui en bloque l'entrée tant qu'aucun signal n'est émis à la sortie de la porte 50. Lorsque cette phase de permutation est terminée, la porte 25 laisse passer des impulsions de lecture en nombre égal au nombre de bits du registre à décalage formé par les bascules 102, en vue de la lecture de son contenu. Le circuit 123 a pour but de provoquer une destruction de la clé lors d'une tentative frauduleuse de trouver le code. A chaque mise sous tension de la clé, le compteur 124, 125 est incrémenté à moins d'être remis à zéro par le nombre correct d'impulsions de chargement appliqués à la borne C. Ainsi, à la quatrième mise sous tension sans remise à zéro intermédiaire, une impulsion va apparaître à la sortie Q de la bascule 125, laquelle appliquée à la borne de commande des éléments à trois états 104, 105 et 117 provoque le grillage des fusibles 108, 109 et 116.

De nombreuses variantes peuvent être prévues dans le cadre de l'invention, c'est-à-dire tout en assurant la destruction de la zone de mémoire passive préprogrammée après un nombre déterminé N de tentatives infructueuses de lecture du code contenu dans ladite zone passive préprogrammée.

Il est clair que dans le nombre N ci-dessus, il ne faut pas prendre en compte les tentatives infructueuses dues à un fonctionnement défectueux de l'électronique, défectuosités dues par exemple à des parasites industriels. Un perfectionnement va consister à lancer l'opération de reconnaissance de la partie mobile un certain nombre de fois et à faire une statistique pour donner l'accord d'utilisation.

Par exemple, on interrogera 10 fois la partie mobile et on ne donnera l'accord que si au moins dans 9 cas, le résultat est positif. Au bout de deux erreurs, le cycle continue, les erreurs sont mises en mémoire tampon ; à la fin de dix cycles, l'accord n'est pas donné, le fraudeur qui lirait en ligne ne saurait pas quand l'erreur a eu lieu.

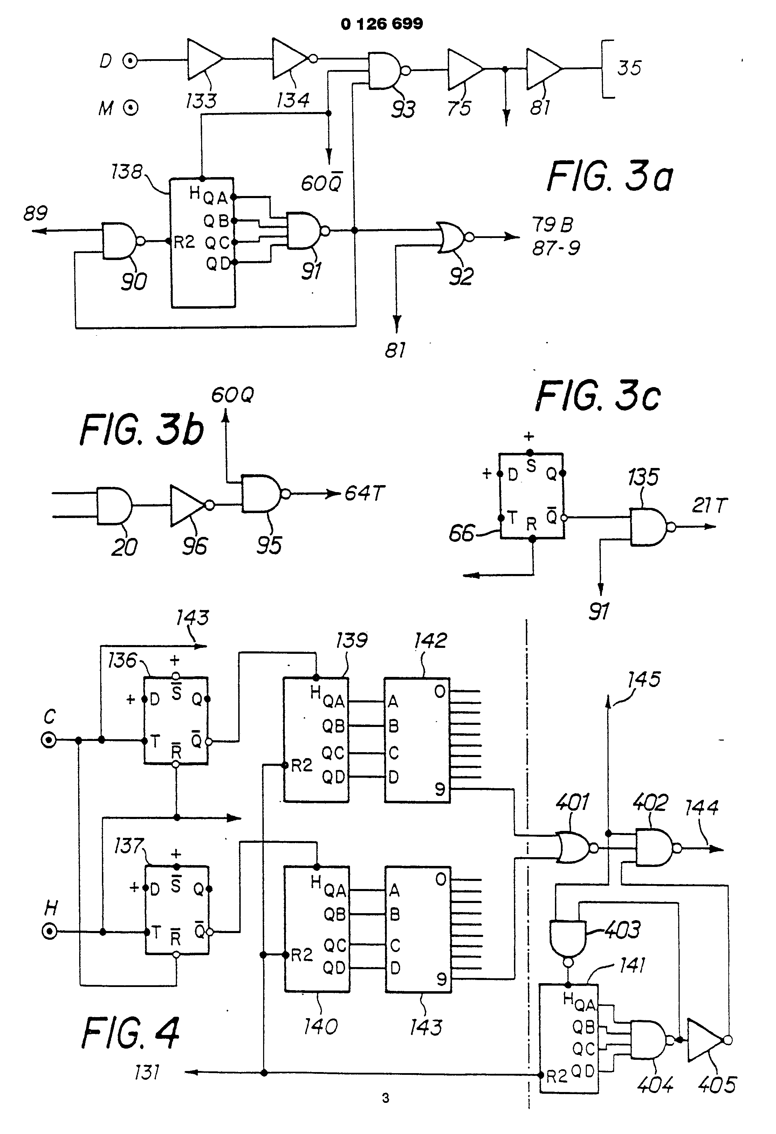

Les figures 3a, 3b, 3c, indiquent les modifications à apporter au schéma selon figure 1 de la partie fixe.

Comme on peut le voir sur la fig. 3a on a rajouté un compteur 138, compteur par dix ans dans l'exemple illustré, qui est relié à la sortie Q̄ du monostable 60 du circuit d'arrêt de lecture 55. De cette manière, après chaque lecture, le compteur 138 est incrémenté. De plus un nouveau cycle de lecture est commandé par action sur la porte ET 93 également reliée à la sortie Q̄ du monostable 60. Comme on le voit sur la figure 3b, le résultat de la comparaison pour chaque cycle de lecture est appliqué à la sortie de la porte ET 20 par l'intermédiaire de l'inverseur 96 sur la porte NON-ET 95 qui reçoit sur son autre entrée le signal apparaissant sur la sortie Q du monostable 60.

Les comparaisons négatives sont donc appliquées par la sortie de la porte 95 sur l'entrée du circuit d'autorisation d'essais successifs 61 (entrée T de la bascule 64), ce circuit pouvant compter jusqu'à 4 essais infructueux.

La sortie du compteur 138 (fig. 3a) est reliée par l'intermédiaire de la porte NON-ET 91 à la porte NON-ET 135 (fig. 3c) qui reçoit également la sortie du circuit d'autorisation d'essais successifs 61 (Sortie Q̄ de la bascule 66). La commande d'utilisation, c'est-à-dire le signal appliqué sur l'entrée ET de la bascule 21, est le signal de sortie de la porte NON-ET 135. On voit que de cette manière l'autorisation n'est fournie sur la bascule 21 qu'après le nombre de cycles de lecture et de comparaison défini par le compteur 138 et dans la mesure où le nombre d'erreurs enregistrées sur le circuit 61 est inférieur à quatre pour l'exemple illustré. La remise à zéro du compteur 138 se fait par l'intermédiaire de la porte NON-ET 90 qui est reliée d'une part à la sortie de la porte NON-ET 91 et d'autre part à la sortie de l'inverseur 89 (fig. 3a).

Pour que le système ne soit pas décelable par une reproductibilité exacte de chaque interrogation, il convient de préférence de modifier à chacune de celle-ci les modulations de chargement et d'horloge d'une manière, si possible, aléatoire. Il faut donc modifier à chaque rotation l'état des interrupteurs 30 et/ou des interrupteurs 46 et/ou des interrupteurs 47 et/ou des interrupteurs 49. La fig. 4 illustre deux modes de réalisation permettant d'obtenir ce résultat.

Le premier mode de réalisation est illustré dans la partie gauche de la fig. 4, les moyens représentés venant s'intégrer dans la partie fixe, c'est-à-dire tel qu'illustré à la fig. 1. Les impulsions de chargement appliquées à la borne C (fig. 1) sont ici également appliquées à l'entrée T d'une bascule supplémentaire 136 dont la sortie Q̄ est reliée à l'entrée d'un compteur 139 associé à un décodeur 142. De la même manière les impulsions de lecture émises par la borne H sont également appliquées à l'entrée T d'une bascule supplémentaire 137 dont la sortie Q̄ est reliée à l'entrée H du compteur 140 associé au décodeur 143. Les entrées de remise à zéro des bascules 136 et 137 sont reliées en quinconce respectivement aux bornes H et C. Au premier train d'impulsions de chargement, le compteur 139 compte une impulsion et le décodeur 142 avance. De la même manière au premier train d'impulsions d'horloge le compteur 140 compte une impulsion et le décodeur 143 avance.

Comme illustré sur la fig. 4, chaque sortie du décodeur 142 est reliée au même titre que l'une des sorties du décodeur 143 à une porte NON-OU 401.

Le programme, c'est-à-dire le nombre d'impulsions préliminaires comptées est ainsi modifié pour la modulation d'horloge par le premier front montant des impulsions de chargement, et pour la modulation de chargement par le premier front montant des impulsions d'horloge. Une variante a été illustrée sur la partie droite de la fig. 4 dans laquelle la porte 401 ne donne l'autorisation d'entrée des informations provenant de l'entrée de programmation 145, que si le nombre de cycles de chargement et d'horloge est correct et conforme à la programmation souhaitée et définie par les compteurs 139 et 140. La sortie de la porte NON-OU 401 est reliée à l'une des entrées de la porte NON-ET 402 dont le signal de sortie 144 correspond au signal d'autorisation d'utilisation. L'entrée de programmation 145 est reliée à l'une des entrées de la porte NON-ET 403 dont l'autre entrée reçoit la sortie de la porte NON-ET 404 placée à la sortie du compteur 141. L'inverseur 405 est relié à la troisième entrée de la porte NON-ET 402.

Une utilisation intéressante de l'invention est la carte de crédit à mémoire. Il est alors possible en variante de réaliser une partie fixe dite « directoriale », c'est-à-dire que seulement une partie fixe pourrait lire toutes les parties mobiles pour vérifier le contenu de ces parties mobiles.

Il suffirait pour cela de rajouter un même code à toutes les parties mobiles qui serait à tester par cette partie fixe « directoriale » et rajouter dans la partie fixe le décodeur y afférant en ne tenant pas compte du code confidentiel de chaque partie mobile. Elle pourrait, par contre, faire une vérification du numéro confidentiel du particulier, afin de donner, par exemple, l'historique de la partie mobile soit les débits, les crédits, avec les dates et finalement un fichier complet de la partie mobile, ce fichier pouvant même permettre de fournir un ticket par une imprimante. Donc, la partie mobile qui possède déjà un code programmé en usine, qui est le code de reconnaissance, peut renfermer différents registres programmables de diverses manières, en fonction des moyens utilisés.

Selon une autre variante encore, la partie mobile peut comprendre un compteur d'utilisation qui s'incrémente à chaque utilisation et garde en mémoire cette comptabilité pour permettre de savoir si quelqu'un s'est servi de sa partie mobile à son insu. Ce comptage peut se faire à l'aide d'un système à fusible ou en programmant une EPROM.

Il est bien entendu qu'il faut prévoir, dans la partie fixe, un lecteur de ce compteur; cela pourrait être dans l'appareil dit « directorial », cité plus haut.

La lecture de ce nouveau code pourrait se faire à la fin ou au début du code de reconnaissance, une zone de contrôle étant prévue à cet effet.

En variante encore, il est possible de prévoir une partie mobile « hiérarchisée », c'est-à-dire, dans le cas où par exemple la partie mobile serait constituée par une clé destinée à ouvrir une porte, la partie mobile dite « directoriale » aurait la possibilité d'ouvrir toutes les portes, la partie mobile « sous-directoriale » n'ouvrirait que la moitié des portes, etc. jusqu'au client qui ne pourrait ouvrir que sa porte uniquement. Ceci peut être valable pour un hôtel, un hôpital, etc.

Toujours en variante, différentes zones mémoires de la partie mobile peuvent être utilisées avec ou sans code complémentaire (clavier), une même partie mobile pouvant comporter des zones conditionnées à l'entrée d'un code complémentaire, d'autres pas ; par exemple le code complémentaire sera nécessaire pour effectuer un retrait d'argent tandis qu'il ne sera pas nécessaire pour un péage d'autoroute ou pour téléphoner.

Une partie mobile peut comporter autant de zones que souhaité, par exemple, une par établissement financier et n établissements financiers : dans ce cas, la reconnaissance de chaque zone peut être le fait de la partie fixe qui fait le choix automatiquement, par exemple pour le retrait d'argent à une caisse de banque. La sélection de la zone mémoire pourrait se faire en utilisant les premiers bits de chargement et les premiers bits de l'horloge, lors du premier cycle de reconnaissance, par exemple. La sélection se ferait dans la partie mobile. Le décodage de ces bits donnerait l'adresse de la zone mémoire à utiliser. Le code secret pour réaliser des transactions pourrait rester le même pour toutes les zones mémoires, mais pourrait changer en fonction de l'adresse donnée par le premier cycle « chargement-horloge ». L'adresse du code étant également donnée par le premier cycle, il n'y aurait donc qu'une partie cycle qui serait commune à tous les systèmes.

La sélection de la zone mémoire pourrait également nécessiter un signal résultant d'une intervention manuelle, survenant au niveau de la partie mobile par un poussoir situé en regard des zones choisies ou dans la majorité des cas, un poussoir intégré dans la partie fixe.

Exemple d'utilisation : soit une caisse enregistreuse type grandes surfaces comportant de façon très accessible diverses touches numérotées par exemple 1, 2, 3, 4, ... La partie mobile comporte un certain nombre de zones répertoriées 1, 2, 3, 4, ... avec en regard le nom d'un établissement financier. A l'utilisation, le détenteur de la partie mobile choisit la zone, en fait la banque par exemple, la zone n° 2 correspondant à la banque X, et après introduction de la partie mobile appuie sur le poussoir n° 2 de la caisse enregistreuse ; c'est donc la zone 2, correspondant à la banque X qui sera débitée.

L'intérêt de ce système d'une extrême souplesse permet à un utilisateur donné d'avoir les banques W, X, Y, Z et à un autre les banques Q, R, S, chaque zone affectée d'un numéro figurant aussi sur la caisse, et donc l'acceptation à une caisse enregistreuse de cartes d'origine bancaire diverse, tout comme sont acceptés actuellement des chèques de diverses provenances.

Au lieu de permettre la lecture d'une mémoire de partie mobile, fonctionnant par exemple comme carte de crédit-débit, par introduction dans une partie fixe, comme vu plus haut, la partie mobile peut comporter un affichage à cristaux liquides, ou encore l'utilisateur pourrait disposer d'un système récepteur dans lequel il enfilerait sa partie mobile.

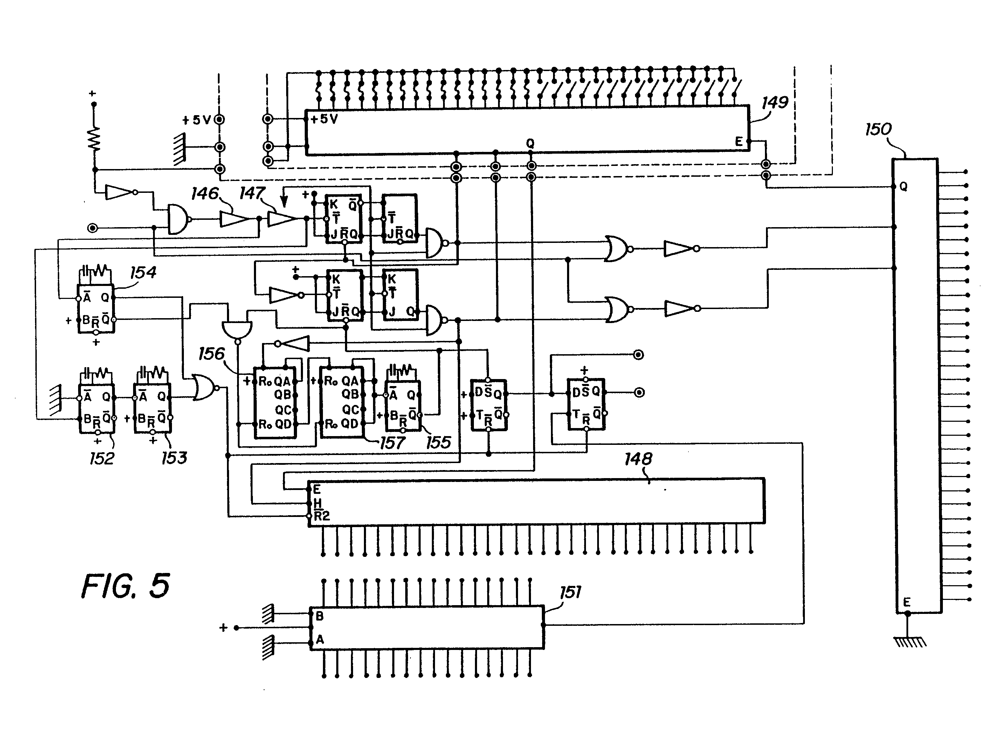

A la figure 5, qui illustre un registre à décalage avec programmation du code variable à la demande, les éléments sont des temporisateurs, les éléments 148, 149, 150 des registres à décalage série-parallèle pour 148 et parallèle-série pour 149 et 150 tandis que l'élément 151 est un comparateur. Les éléments 152, 153, 154, 155 sont des monostables et les éléments 156, 157 des compteurs. Les autres éléments sont soit des bascules soit des portes représentées de façon conventionnelle.

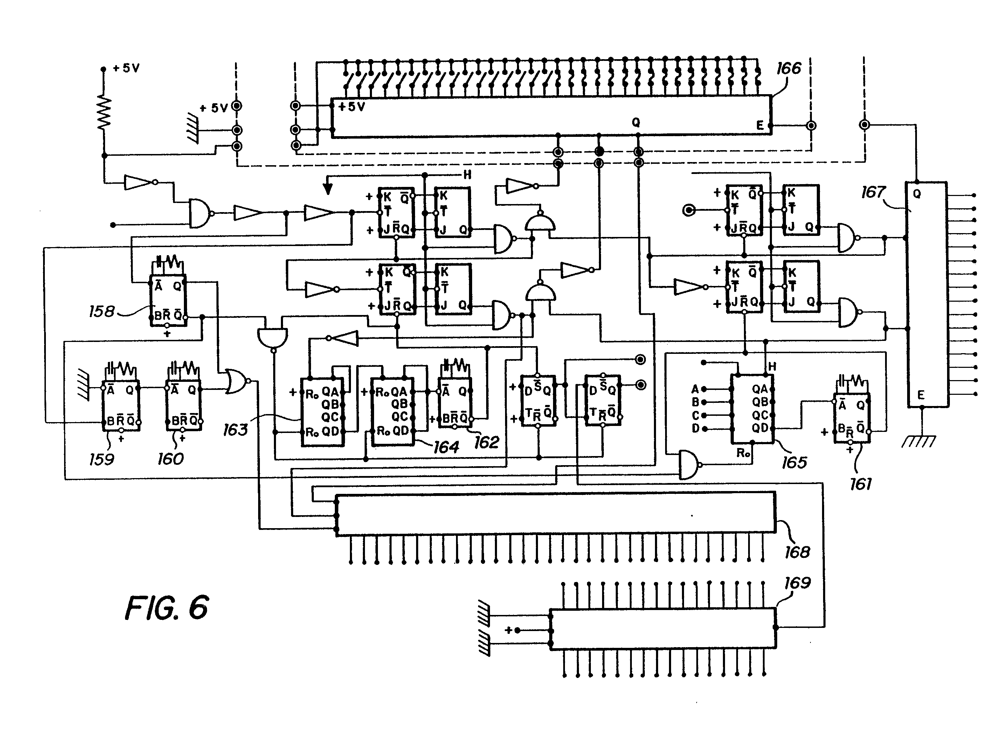

A la figure 6, qui représente également un registre à décalage avec programmation du code variable à la demande, 158, 159, 160, 161, 162 sont des monostables, 163, 164, 165 des compteurs, 166, 167 des registres à décalage parallèle-série, 168 un registre à décalage série-parallèle, 169 un comparateur et les autres éléments, non indicés, des basculés ou des portes.

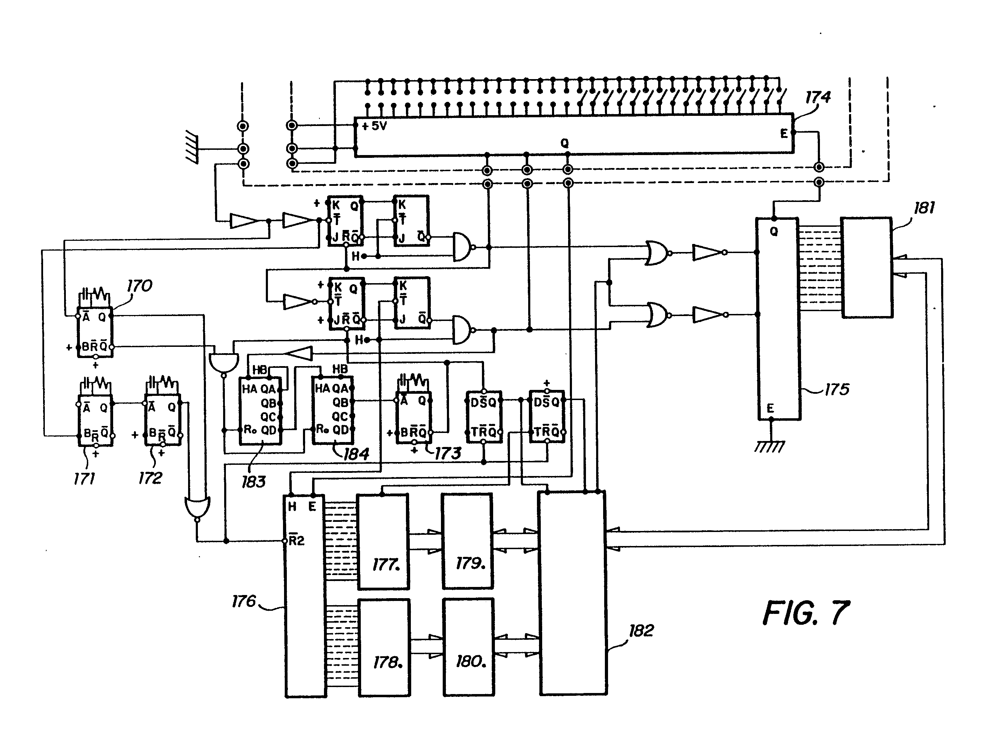

A la figure 7, qui représente un système pour programmation de chargement de code avec un nombre fixe de bits d'écriture et commande d'écriture synchrome avec la lecture, 170, 171, 172, 173 représentent des monostables, 174, 175 des registres à décalage parallèle-série, 176 un registre à décalage série-parallèle, 177, 178 un comparateur et une mémoire, 179, 180, 181 des PIA, 182 un μP, et 183 et 184 des compteurs. Les autres éléments sont des portes, des bascules, des temporisateurs ou des inverseurs représentés de façon symbolique conventionnelle.

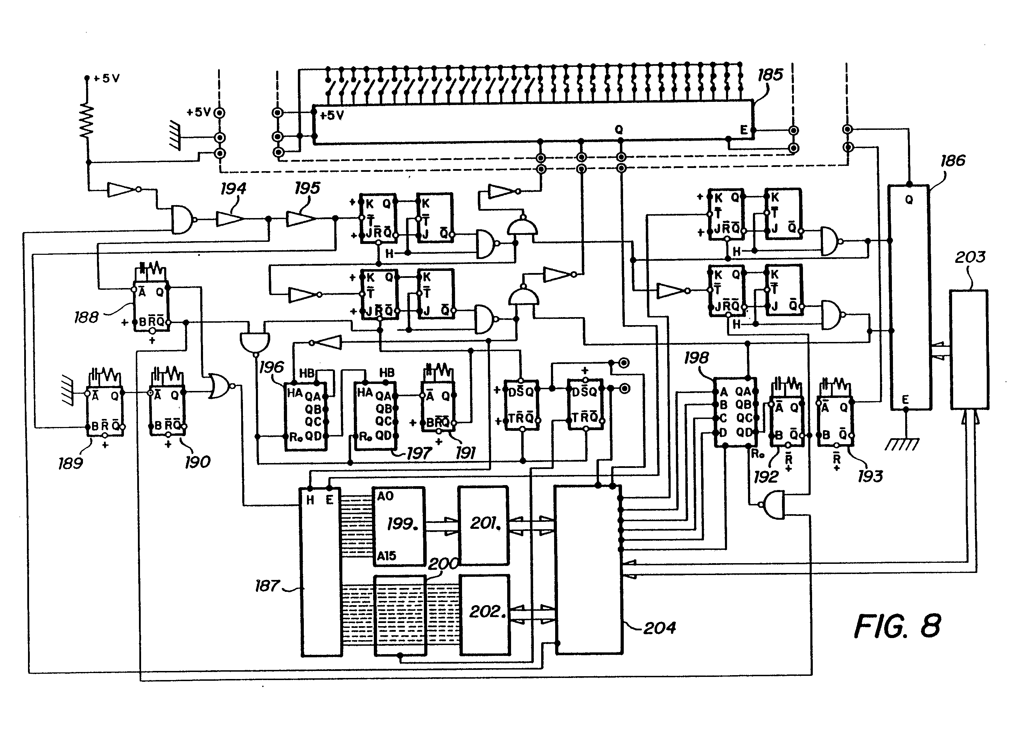

A la figure 8, qui représente un système pour programmation de chargement de code avec un nombre variable de bits d'écriture et commande d'écriture indépendante, 185, 186 sont des registres à décalage parallèle-série, 187 un registre à décalage série-parallèle, 188, 189, 190, 191, 192, 193 des monostables, 194, 195 des temporisateurs, 196, 197, 198 des compteurs, 199 des mémoires protégées, 200 un comparateur, 201, 202, 203 des PIA et 204 un microprocesseur. Les autres éléments sont, représentés de façon symbolique conventionnelle, des bascules, des portes ou des inverseurs.

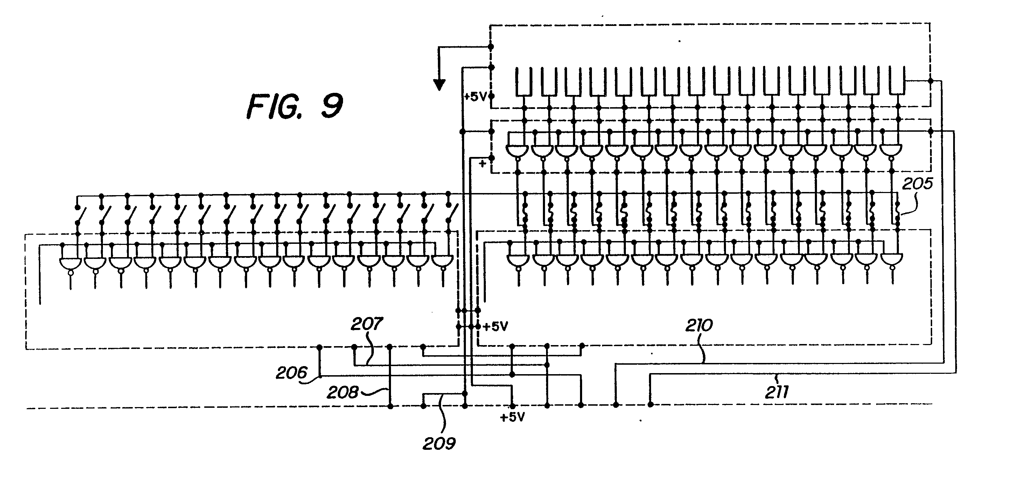

A la figure 9, qui représente un système intégré dans la clé pour un chargement de code aléatoire à 16 bits fixes et 16 bits aléatoires, 205 représente des fusibles, 206, 207, 208, 209, 210, 211 des conducteurs de chargement, d'horloge, de sortie, de masse, d'entrée, et de commande de fusibles.

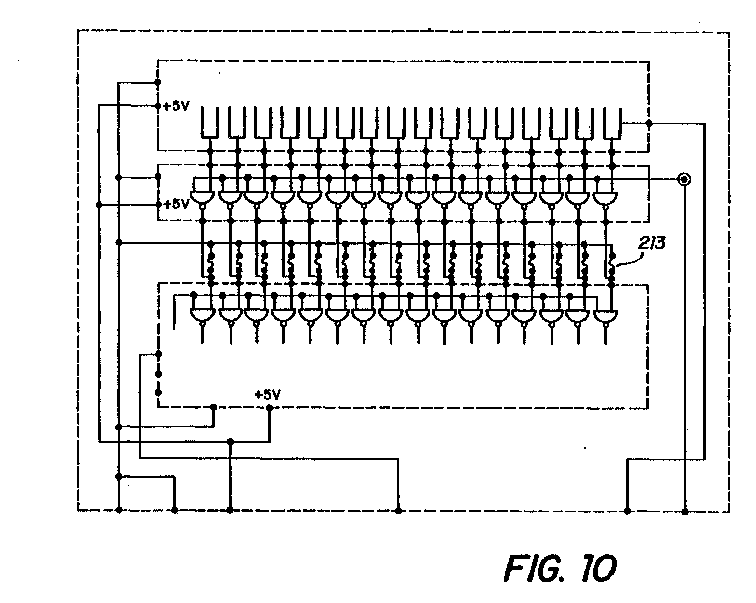

A la figure 10, qui représente un système. intégré pour un chargement de code aléatoire sur 16 bits mais qui peut être porté sur autant de bits que le permet l'intégration, 213, représente des fusibles, les bornes usuelles de masse, de chargement de sortie etc. étant représentées de façon très schématique.

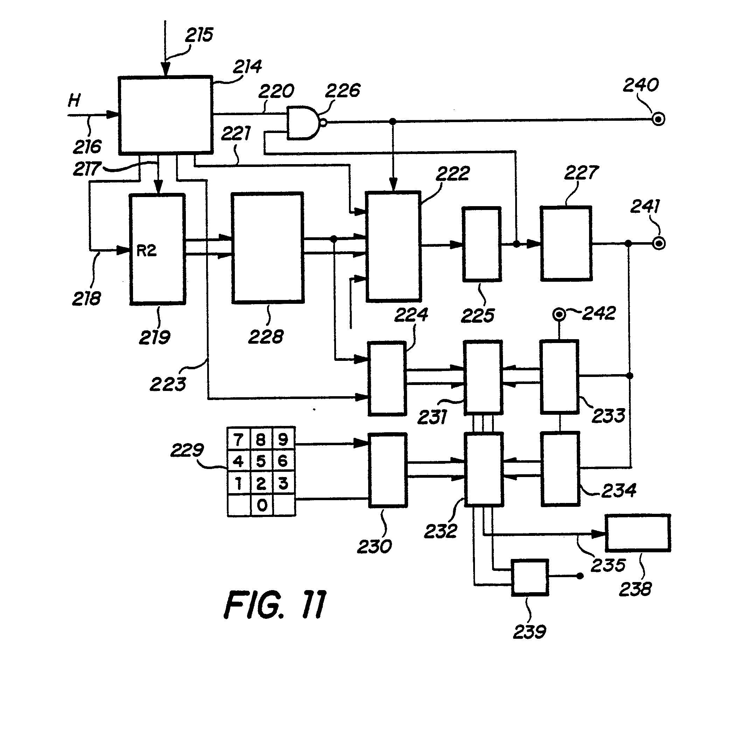

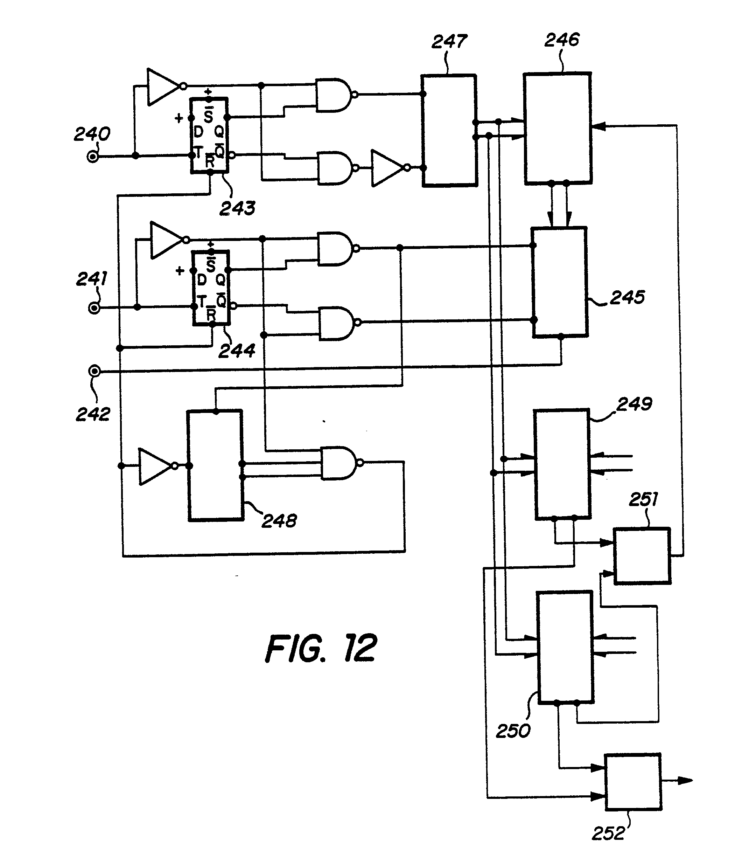

Selon la variante des figures 11 et 12, la partie fixe comprend une mémoire renfermant le code à envoyer vers la partie mobile, et pilotant un compteur/décompteur à prépositionnement permettant d'envoyer le nombre de bits nécessaire pour une adresse vers la partie mobile.

Une mémoire de la partie mobile peut fournir une donnée à l'adresse, qui est envoyée, par l'intermédiaire d'un registre à décalage parallèle-série, vers la partie fixe pour effectuer une comparaison.

La mémoire de la partie fixe peut être constituée par une ROM, EPROM ou EEPROM et la mémoire pour la partie mobile par une EEPROM.

Tel qu'illustré sur les figures 11 et 12, la partie fixe comprend une logique de base 214 avec une entrée 215 de lancement de séquence, une entrée horloge 216, deux sorties 217, 218 d'alimentation d'un compteur 219, une sortie de chargement 220, une sortie d'alimentation 221, d'un compteur à prépositionnement 222 et une sortie 223 de commande d'un latch 224. Un circuit 225 de détection du passage à zéro est alimenté par la sortie du compteur 222 et alimente lui-même une porte NAND 226 ainsi qu'un circuit 227 de lancement d'une horloge de lecture.

La partie fixe comprend encore une mémoire ROM, PROM ou EPROM 228, alimentée par le compteur 219 et alimentant le compteur 222 et le latch 224.

Un clavier 229 alimente un deuxième latch 230, les latch 224 et 230 alimentant eux-mêmes des comparateurs 231 respectivement 232, dont les entrées opposées sont alimentées par des registres série/parallèle 233, 234. Les trois sorties 235, 236, 237 du comparateur 232 vont respectivement vers un circuit d'accord 238 et un circuit de désaccord 239 dont la sortie alimente le compteur d'erreurs non représenté sur cette figure.

La partie mobile correspondante représentée à la figure 12 comprend une borne d'entrée de chargement 240, une borne d'entrée d'horloge 241 et une borne de sortie du signal 242 correspondant évidemment aux bornes référenciées par les mêmes chiffres à la figure 11. Les bornes 240, 241 attaquent respectivement deux bascules 243, 244 et la borne 242 un registre parallèle-série 245 recevant les données d'une mémoire EEPROM 246, la sortie du registre 245 alimentant la borne 242. Le circuit comprend encore deux compteurs, dont le premier 247 alimente la mémoire 246 d'une part et deux comparateurs 249, 250 d'autre part. Les comparateurs 249 et 250 alimentent deux circuits 251, 252 dont les sorties servent respectivement à écrire les alarmes dans une zone de la mémoire 246 réservée au blocage de la mémoire après un certain nombre de tentatives de fraudes, et à donner un accord d'écriture dans une mémoire réservée à la comptabilité.

La mémoire 228 de la partie fixe contient le code à envoyer vers la partie mobile et pilote le compteur/décompteur 222 permettant d'envoyer le nombre de bits nécessaire pour une adresse, vers la partie mobile, cette adresse étant décodée dans la partie mobile.

L'EEPROM 246 de la partie mobile fournit une donnée à cette adresse, qui est envoyée, par l'intermédiaire du registre 245, vers la partie fixe où une comparaison est effectuée dans les comparateurs 249, 250 comme dans les formes d'exécution précédemment décrites. Dans la partie mobile, les entrées des comparateurs 249, 250 opposés à celles alimentées par le compteur 247, reçoivent des adresses minimales respectivement maximales permettant une détection de recherche frauduleuse du code avec deux possibilités :

soit de stocker les erreurs, soit au bout d'un certain nombre d'erreurs de bloquer la mémoire.

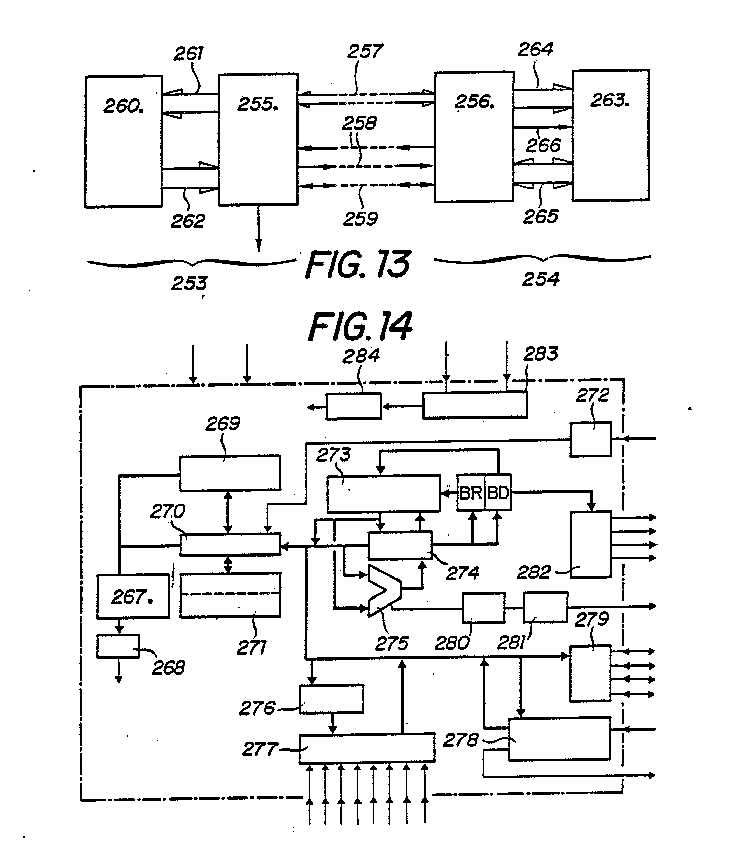

Les figures 13 et 14 illustrent respectivement une vue synoptique et une vue de détail d'une forme d'exécution de la variante des figures 11 et 12.

On voit aux figures 13 et 14 que la liaison entre la partie fixe ou récepteur 253 et la partie mobile ou émetteur 254 s'effectue par l'intermédiaire de COPS 255 et 256 entre lesquels les données sont véhiculées en 257 ; des liaisons série sont établies en 258 et l'alimentation en 259. Le COPS 255 coopère avec une EPROM ou EEPROM 260 par l'intermédiaire d'un bus d'adresses 261 et d'un bus de données 262 de même que le COPS 256 coopère avec une EPROM ou EEPROM 263 par l'intermédiaire d'un bus d'adresses 264, d'un bus de données 265 et d'une ligne de commande R/W 266.

Le schéma-bloc du COPS représenté à la figure 14 comprend une logique de décodage et de commande des instructions 267, un circuit de commande I/O 268, une mémoire des adresses de programmes 269, un compteur de programme 270, une pile à deux niveaux 271, coopérant en outre avec une logique de remise à zéro 272, une mémoire d'adresses de données 273, un accumulateur 274, une unité arithmétique et logique 275 ainsi qu'avec différents registres et drivers 276 à 282.

Il comprend encore un générateur d'impulsions d'horloge 283 et un diviseur 284.

On voit, à la figure 13, que la programmation des mémoires EPROM et des mémoires ROM pourrait être réalisée de manière à obtenir l'organigramme et le chronogramme donnés, à la différence près que les bits de chargement LOAD seraient progammés par paquet de 8 bits, à cause de l'organisation de la mémoire EPROM choisie dans ce cas particulier (2 048 × 8), mais il serait bien entendu possible d'utiliser des mémoires EPROM d'une organisation différente.

La programmation changerait de la mémoire ROM du COPS, mais le résultat serait évidemment le même. L'utilisation de l'unité de calcul ALU 274 et de la ROM 269 intégrée dans le COPS de la partie mobile 254 permettraient de réaliser l'équivalent de la modulation d'horloge, et la programmation de la ROM dans la partie fixe 253 permettrait de créer la modulation de chargement de la partie mobile, la programmation primaire réalisée dans la mémoire EPROM de la partie mobile.

La programmation résultant des différentes modulations donnerait un code qui serait programmé dans la mémoire EPROM 260 de la partie fixe 253 à la place des registres à décalage du système décrit.

L'unité logique arithmétique du COPS 255 de la partie fixe 253 effectuerait une comparaison, le tout étant géré par la mémoire ROM de la partie fixe. Dans cette variante, étant donné l'utilisation d'une EPROM 260 dans la partie fixe et dans la partie mobile, il est possible de modifier le code dans cette EPROM 263, selon les besoins de l'opportunité.

Le changement de code peut être programmé dans la ROM de la partie fixe qui commande le changement de code de l'EEPROM de la partie fixe et de celui de la partie mobile. Selon le principe de l'EEPROM choisie dans ce cas UV ERASABLE PROM, le changement de code est limité, car nous ne pouvons qu'incrémenter le code. Il est toutefois clair que des mémoires de technologie EPROM telles qu'évoquées par ailleurs dans les demandes de brevets antérieures EP nos 65 182 et 65 181 permettraient de changer le code d'une manière plus souple et pour une durée pratiquement infinie.

L'utilisation de ces deux ensembles COPS EPROM ou EEPROM permet un nombre de combinaisons très important, dans la mesure où sont appliquées les descriptions figurant dans les documents antérieurs des déposants.

**Revendications**

1. Dispositif d'identification électronique comprenant : Une partie mobile ayant une zone de mémoire passive préprogrammée (108, 109) renfermant un code électronique d'identification sous la forme de l'état d'une pluralité d'interrupteurs à fusible, connectée à une mémoire (102) pouvant être lue ; et une partie fixe à laquelle la partie mobile peut être couplée ; la partie fixe comprenant : des moyens d'alimentation en courant électrique ; des moyens électroniques de chargement (29) pour fournir au moins une impulsion de chargement provoquant le chargement du code électronique d'identification dans la mémoire (102) pouvant être lue ; des moyens électroniques de lecture (33) pour lire le contenu de la mémoire (102) pouvant être lue de la partie mobile et le transférer dans une seconde mémoire (22, 23, 24) de la partie fixe ; des moyens de comparaison (1 à 6) pour comparer ledit contenu avec un code se trouvant dans la partie fixe ; des moyens de transfert (26, 42) pour fournir à la partie mobile, avant l'opération effective de lecture, un nombre déterminé d'impulsions préliminaires ; la partie mobile comprenant des moyens de modification (111 à 115 ; 118, 119) recevant lesdites impulsions préliminaires et capables de provoquer, pour chacune de ces impulsions préliminaires, une modification du contenu de la mémoire (102) pouvant être lue de la partie mobile ; caractérisé par le fait qu'il comprend des moyens de destruction (123) du code électronique d'identification, conçus pour réagir à un nombre erroné d'impulsions préliminaires appliquées à la partie mobile pour procéder à la modification du contenu de la mémoire (102) de la partie mobile avant l'opération effective de lecture.

2. Dispositif selon la revendication 1, dans lequel les moyens de chargement (29) de la partie fixe coopèrent avec des moyens de modulation de chargement (26) pour envoyer à la partie mobile avant l'opération effective de lecture, un premier nombre déterminé d'impulsions préliminaires provoquant à la fois le chargement du code d'identification dans la mémoire (102) de la partie mobile et une modification du contenu de ladite mémoire et les moyens de lecture (33) de la partie fixe coopèrent avec des moyens de modulation d'horloge (42) et de blocage de lecture (25) pour envoyer à la partie mobile, avant l'opération effective de lecture, un deuxième nombre déterminé d'impulsions préliminaires provoquant une modification du contenu de la mémoire de la partie mobile, caractérisé par le fait que les moyens de destruction (123) sont conçus pour réagir à un nombre erroné du premier groupe d'impulsions préliminaires.

3. Dispositif selon les revendications 1 ou 2, caractérisé par le fait que les fusibles de la zone de mémoire préprogrammée dont l'état représente le code d'identification sont chacun reliés à un élément logique à 3 états (104, 105) commandé par les moyens de destruction de façon à permettre la destruction de la totalité des fusibles.

4. Dispositif selon les revendications 1 à 3, dans lequel les moyens de chargement (29) de la partie fixe coopèrent avec des moyens de modulation de chargement (26) pour envoyer à la partie mobile avant l'opération effective de lecture, un premier nombre déterminé d'impulsions préliminaires provoquant à la fois le chargement du code d'identification dans la mémoire (102) de la partie mobile et une modification du contenu de ladite mémoire, caractérisé par le fait qu'une pluralité de fusibles supplémentaires (116) sont branchés en parallèle sur le passage desdites impulsions préliminaires de façon à provoquer, selon leur état individuel, une modification supplémentaire du contenu de ladite mémoire, les moyens de destruction (123) étant conçus pour détruire également la totalité des fusibles supplémentaires (116).

5. Dispositif selon la revendication 4 dans lequel la mémoire (102) pouvant être lue de la partie mobile comprend un registre à décalage dont chaque bascule est reliée par l'intermédiaire de portes logiques à au moins un fusible (108, 109) dont l'état représente le code d'identification, caractérisé par le fait que la partie mobile comprend en outre un registre à décalage (111 à 115) de chargement associé à un décodeur (110) recevant lesdites impulsions préliminaires, chaque sortie (1 à 24) du décodeur (110) étant reliée d'une part aux portes logiques (106, 107) de la mémoire (102) et d'autre part, par l'intermédiaire d'un fusible supplémentaire (116) à un élément logique à 3 états (117) dont un signal de sortie provoque l'émission d'une impulsion de lecture sur le registre à décalage de la mémoire (102), ledit élément logique à 3 états étant commandé par les moyens de destruction de façon à permettre la destruction de la totalité des fusibles supplémentaires.

6. Dispositif selon les revendications précédentes, dans lequel les moyens de destruction (123) comprennent un compteur (124, 125) qui est incrémenté à chaque mise sous tension de la partie mobile et qui est remis à zéro chaque fois qu'un nombre prédéterminé d'impulsions préliminaires a été appliqué à la partie mobile avant l'opération effective de lecture, ledit compteur émettant après un nombre prédéterminé de mises sous tension sans remise à zéro intermédiaire, un signal de sortie provoquant la destruction.

7. Dispositif selon la revendication 6, caractérisé par le fait que les moyens de destruction (123) comprennent un diviseur (127) recevant les impulsions préliminaires et émettant une impulsion de sortie lorsque ledit nombre prédéterminé d'impulsions préliminaires a été reçu, cette impulsion de sortie servant à remettre à zéro ledit compteur (124, 125).

8. Dispositif selon les revendications précédentes comprenant des moyens dans la partie fixe pour répéter un certain nombre de fois l'opération de transfert des impulsions préliminaires suivie des opérations de lecture du code et de comparaison, des moyens (61) pour compter le nombre de résultats négatifs, caractérisé par le fait qu'il comprend des moyens (138) pour compter le nombre de répétitions et pour ne donner l'accord d'utilisation que lorsque le taux de résultats positifs atteint une valeur déterminée.

9. Dispositif selon l'une des revendications précédentes, caractérisé par le fait que la partie fixe comprend des moyens pour procéder à plusieurs cycles successifs de transfert d'impulsions préliminaires et des moyens (139, 140) pour modifier à chaque cycle le nombre d'impulsions préliminaires du cycle considéré.

10. Dispositif selon l'une des revendications précédentes, caractérisé en ce que ladite partie fixe comprend un clavier (8) pour introduire, lors d'une mise en action du dispositif d'identification, une partie dudit code contenu dans ladite partie fixe.

11. Dispositif selon l'une des revendications précédentes, caractérisé en ce que la partie mobile comprend au moins une zone mémoire, dans laquelle peut être enregistré un compte.

12. Dispositif selon la revendication 11, caractérisé en ce que la partie fixe comprend des moyens pour lire et afficher le compte contenu dans ladite zone mémoire.

13. Dispositif selon la revendication 11, caractérisé en ce que la partie mobile comprend un affichage à cristaux liquide pour afficher le compte contenu dans ladite zone mémoire.

14. Dispositif selon la revendication 1, caractérisé en ce que la partie fixe comprend une mémoire (228) renfermant le code à envoyer vers la partie mobile, et pilotant un compteur/décompteur à prépositionnement (222) permettant d'envoyer le nombre de bits nécessaire pour une adresse, vers la partie mobile.

15. Dispositif selon la revendication 14, caractérisé en ce qu'une mémoire (246) de la partie mobile fournit une donnée à l'adresse, qui est envoyée, par l'intermédiaire d'un registre à décalage parallèle-série (245), vers la partie fixe pour effectuer une comparaison.

16. Dispositif selon les revendications 14 ou 15, caractérisé en ce que la mémoire (228) de la partie fixe est constituée par une ROM, EPROM ou EEPROM et la mémoire (246) de la partie mobile par une EEPROM.

**Claims**

1. Electronic identification device comprising : a movable part having a preprogrammed passive memory zone (108, 109) containing an electronic identification code in the form of the state of a plurality of fuse outouts connected to a readable memory (102) ; and a fixed part to which the movable part can be coupled ; the fixed part comprising : electrical current supply means ; electronic loading means (29) for supplying at least one loading pulse causing the electronic identification code to be loaded in the readable memory (102) ; electronic reading means (33) for reading the content of the readable memory (102) of the movable part and for transferring it to a second memory (22, 23, 24) of the fixed part ; comparison means (1 to 6) for comparing the said content with a code located in the fixed part transfer means (26, 42) for supplying a specific number of preliminary pulses to the movable part before the actual reading operation ; the movable part possessing change means (111 to 115 ; 118, 119) receiving the said preliminary pulses and capable of causing a change in the content of the readable memory (102) of the movable part for each of these preliminary pulses ; characterized in that it comprises means (123) for destroying the electronic identification code, designed to react to an incorrect number of preliminary pulses applied to the movable part in order to make the change in the content of the memory (102) of the movable part before the actual reading operation.

2. Device according to Claim 1, wherein the loading means (29) of the fixed part interact with loading modulation means (26) for sending to the movable part, before the actual reading operation, a first specific number of preliminary pulses causing both the loading of the identification code in the memory (102) of the movable part and a change of the content of the said memory, and the reading means (33) of the fixed part interact with clock modulation (42) and reading stop (25) means for sending to the movable part, before the actual reading operation, a second specific number of preliminary pulses causing a change of the content of the memory of the movable part, characterized in that the destruction means (123) are designed to react to an incorrect number of the first group of preliminary pulses.

3. Device according to Claims 1 or 2, characterized in that the fuses of the preprogrammed memory zone, the state of which represents the identification code, are each connected to a three-state logical element (104, 105) controlled by the destruction means so as to make it possible to destroy all the fuses.

4. Device according to Claims 1 to 3, wherein the loading means (29) of the fixed part interact with loading modulation means (26) for sending to the movable part, before the actual reading operation, a first specific number of preliminary pulses causing both the loading of the identification code in the memory (102) of the movable part and a change in the content of the said memory, characterized in that a plurality of additional fuses (116) are connected in parallel in the path of the said preliminary pulses, so as to cause an additional change in the content of the second memory according to their. individual state the destruction means (123) being designed likewise to destroy all the additional fuses (116).

5. Device according to Claim 4, wherein the readable memory (102) of the movable part comprises a shift register, each flipflop of which is connected by means of logical gates to at least one fuse (108, 109), the state of which represents the identification code, characterized in that the movable part also possesses a loading shift register (111 to 115) associated with a decoder (110) receiving the said preliminary pulses, each output (1 to 24) of the decoder (110) being connected on the one hand to the logical gates (106, 107) of the memory (102) and on the other hand, by means of an additional fuse (116), to a three-state logical element (117), an output signal of which causes the emission of a reading pulse at the shift register memory (102), the said three-state logical element being controlled by the destruction means so as to make it possible to destroy all the additional fuses.

6. Device according to the preceding claims, wherein the destruction means (123) comprise a counter (124, 125), to which an increment is added each time the movable part is energized and which is reset to zero whenever a predetermined number of preliminary pulses has been applied to the movable part before the actual reading operation, the said counter emitting an output signal causing destruction, after a predetermined number of times of energization without intermediate resetting.

7. Device according to Claim 6, characterized in that the destruction means (123) comprise a divider (127) receiving the preliminary pulses and emitting an output pulse when the said predetermined number of preliminary pulses has been received, this output pulse serving for resetting the said counter (124, 125) to zero.

8. Device according to the preceding Claims, possessing means in the fixed part for repeating a certain number of times the operation of transferring the preliminary pulses, followed by the operations of reading a code and of comparison, means (61) for counting the number of negative results, characterized in that it comprises means (138) for counting the number of repetitions and for giving the consent to use only when the proportion of positive results reaches a specific value.

9. Device according to one of the preceding Claims, characterized in that the fixed part possesses means for executing several succesive cycles for the transfer of preliminary pulses and means (139, 140) for modifying, at each cycle, the number of preliminary pulses of the cycle in question.

10. Device according to one of the preceding Claims, characterized in that the said fixed part possesses a keyboard (8) for entering part of the said code contained in the said fixed part when the identification device is actuated.

11. Device according to one of the preceding Claims, characterized in that the movable part possesses at least one memory zone in which an account can be recorded.

12. Device according to Claim 11, characterized in that the fixed part possesses means for reading and displaying the account contained in the said memory zone.

13. Device according to Claim 11, characterized in that the movable part possesses a liquid-crystal display for displaying the account contained in the said memory zone.

14. Device according to Claim 1, characterized in that the fixed part possesses a memory (228) containing a code to be sent to the movable part and activating a reversible counter with prepositioning (222), making it possible to send to the movable part the number of bits necessary for an address.

15. Device according to Claim 14, characterized in that a memory (246) of the movable part supplies data to the address, which is sent to a fixed part by means of a parallel/series shift register (245) in order to make a comparison.

16. Device according to claim 14 or 15, characterized in that the memory (228) of the fixed part consists of a ROM, EPROM, or EEPROM, and the MEMORY (246) of the movable part consists of an EEPROM.

**Patentansprüche**

1. Elektronische Identifizierungseinrichtung mit : einem beweglichen Teil, der einen passiven vorprogrammierten Speicherbereich (108, 109) hat, der einen elektronischen Kenncode enthält, welcher sich aus dem Zustand mehrerer Schmelzschalter ergibt, und der mit einem Lese-Speicher (102) verbunden ist ; und mit einem ortsfesten Teil, an den der bewegliche Teil angeschlossen werden kann ; wobei der ortsfeste Teil umfaßt ; Einrichtungen zum Zuführen von elektrischem Strom, elektronische Lade-Einrichtungen (29), um wenigstens einen Ladeimpuls abzugeben, der das Laden des elektronischen Kenncodes in den Lese-Speicher (102) bewirkt ; elektronische Leseeinrichtungen (33) um den Inhalt des Lese-Speichers (102) des beweglichen Teils zu lesen und um ihn in einen zweiten Speicher (22, 23, 24) des ortsfesten Teils zu übertragen, Vergleichseinrichtungen (1 bis 6) zum Vergleichen des genannten Inhaltes mit einem Code, der sich im ortsfesten Teil befindet ; Übertragungsmittel (26, 42) um an den beweglichen Teil vor dem eigentlichen Lesevorgang eine bestimmte Zahl von Vorimpulsen abzugeben ; wobei der bewegliche Teil Modifizierungseinrichtungen (111 bis 115, 118, 119) umfaßt, welche die Vorimpulse empfangen und die bei jeden dieser Vorimpulse eine Änderung des Inhalts des Lese-Speichers (102) des beweglichen Teils auslösen können, dadurch gekennzeichnet, daß sie Einrichtungen (123) zur Zerstörung des elektronischen Kenncodes aufweist, die so ausgelegt sind, daß sie auf eine falsche Zahl von Vorimpulsen, die an den beweglichen Teil abgegeben worden sind, durch eine Veränderung des Inhaltes des Speichers (102) des beweglichen Teils vor dem eigentlichen Lesevorgang reagieren.

2. Vorrichtung nach Anspruch 1, bei welcher die Ladeeinrichtungen (29) des ortsfesten Teils mit Lademodulationseinrichtungen (26) zusammenwirken, um dem beweglichen Teil vor dem eigentlichen Lesevorgang eine erste bestimmte Zahl von Vorimpulsen zuzuführen, die gleichzeitig das Laden des Kenncodes in den Speicher (102) des beweglichen Teils und eine Modifikation des Inhalts des genannten Speichers auslösen, wobei die Leseeinrichtungen (33) des ortsfesten Teils mit Einrichtungen (42) zur Taktmodulation und zur Blockierung des Lesevorganges (25) zusammenwirken, um vor dem eigentlichen Lesevorgang dem beweglichen Teil eine zweite bestimmte Anzahl von Vorimpulsen zuzuführen, die eine Modifikation des Inhalts des Speichers des beweglichen Teils auslösen, dadurch gekennzeichnet, daß die Einrichtungen (123) zur Zerstörung so ausgelegt sind, daß sie auf eine falsche Zahl bei der ersten Gruppe von Vorimpulsen reagieren.

3. Vorrichtung nach den Ansprüchen 1 oder 2, dadurch gekennzeichnet, daß die Schmelzschalter des vorprogrammierten Speicherbereiches, deren Zustand den Kenncode wiedergibt, je mit einem logischen Element (104, 105) mit drei Zuständen verbunden sind, das von den Zerstörungseinrichtungen so gesteuert wird, daß alle Schmelzschalter zerstört werden können.

4. Vorrichtung nach den Ansprüchen 1 bis 3, wobei die Ladeeinrichtungen (29) des ortsfesten Teils mit Lademodulations-Einrichtungen (26) zusammenwirken, um an den beweglichen Teil vor dem eigentlichen Lesevorgang eine erste bestimmte Zahl von Vorimpulsen zuzuführen, die zugleich das Laden des Kenncodes in den Speicher (102) des beweglichen Teils und eine Modifikation des Inhaltes dieses Speichers auslösen, dadurch gekennzeichnet, daß eine Vielzahl von zusätzlichen Schmelzschaltern (116) zu den Wegen der genannten vorläufigen Impulse parallel geschaltet sind, so daß sie entsprechend ihres Einzelzustandes eine zusätzliche Modifikation des Inhaltes des Speichers auslösen, wobei die Mittel (123) zur Zerstörung so ausgelegt sind, daß sie auch die Gesamtheit der zusätzlichen Schmelzschalter (116) zerstören.

5. Vorrichtung nach Anspruch 4, in welcher der Lese-Speicher (102) des beweglichen Teils ein Schieberegister aufweist, von dem jedes Flipflop über logische Tore mit wenigstens einem Schmelzschalter (108, 109), dessen Zustand den Kenncode wiedergibt, verbunden ist, dadurch gekennzeichnet, daß der bewegliche Teil weiters ein Schieberegister (111 bis 115) zum Laden aufweist, daß einem Decodierer (110) zugeordnet ist, welcher die genannten Vorimpulse empfängt, wobei jeder Ausgang (1 bis 24) des Decodierers (110) einerseits mit den logischen Toren (106, 107) des Speichers (102) und anderseits über einen zusätzlichen Schmelzschalter (116) mit einem logischen Element (117) mit drei Zuständen verbunden ist, von dem ein Ausgangssignal die Abgabe eines Leseimpulses an das Schieberegister des Speichers (102) auslöst, wobei das logische Element mit drei Zuständen durch die Zerstörungseinrichtungen so gesteuert wird, daß alle zusätzlichen Schmelzschalter zerstört werden können.

6. Vorrichtung nach den vorhergehenden Ansprüchen, in der die Zerstörungseinrichtungen (123) eine Zähleinrichtung (124, 125) aufweisen, die bei jedem Unter-Spannung-Setzen des beweglichen Teils weitergestellt wird und die jedesmal wenn vor dem eigentlichen Lesevorgang eine bestimmte Zahl von vorläufigen Impulsen an den beweglichen Teil angelegt wurde, auf Null zurückgestellt wird, wobei die Zähleinrichtung, nachdem sie vorgegebene Male ohne Zwischenrückstellung auf Null unter Spannung gesetzt wurde, ein Ausgangssignal abgibt, das die Zerstörung auslöst.

7. Vorrichtung nach Anspruch 6, dadurch gekennzeichnet, daß die Zerstörungseinrichtungen (123) eine Teileinrichtung (127) aufweisen, welche die Vorimpulse erhält und die einen Ausgangimpuls abgibt, wenn die genannte, vorbestimmte Zahl von Vorimpulsen empfangen worden ist, wobei dieser Ausgangsimpuls dazu dient, die Zähleinrichtung (124, 125) auf Null zurückzustellen.

8. Vorrichtung nach den vorhergehenden Ansprüchen mit Einrichtungen im ortsfesten Teil, um den Vorgang des Übertragens von Vorimpulsen und die anschließenden Vorgänge des Lesens und Vergleichens des Codes eine bestimmte Zahl von Malen zu wiederholen, und mit Einrichtungen (61) zum Zählen der Zahl der negativen Resultate, dadurch gekennzeichnet, daß sie Einrichtungen (138) zum Zählen der Zahl von Wiederholungen aufweist, die nur dann der Benützung zustimmen, wenn die Rate der positiven Resultate einen bestimmten Wert erreicht.

9. Vorrichtung nach einem der vorhergehenden Ansprüche, dadurch gekennzeichnet, daß der ortsfeste Teil Einrichtungen umfaßt, die in mehreren, aufeinanderfolgenden Zyklen Vorimpulse übertragen und Mittel (139, 140) aufweisen, die bei jedem Zyklus die Zahl der Vorimpulse des jeweiligen Zyklus ändern.

10. Vorrichtung nach einem der vorhergehenden Ansprüche, dadurch gekennzeichnet, daß der ortsfeste Teil eine Tastatur (8) aufweist, mit der während einer Benützung der Identifizierungs-vorrichtung ein Teil des im beweglichen Teil enthaltenen Codes eingegeben werden kann.

11. Vorrichtung nach einem der vorhergehenden Ansprüche, dadurch gekennzeichnet, daß der bewegliche Teil wenigstens einen Speicherbereich besitzt, in dem ein Konto registriert werden kann.

12. Vorrichtung nach Anspruch 11, dadurch gekennzeichnet, daß der ortsfeste Teil Einrichtungen zum Lesen und Aufzeigen des im genannten Speicherbereich enthaltenen Kontos aufweist.

13. Vorrichtung nach Anspruch 11, dadurch gekennzeichnet, daß der bewegliche Teil eine Flüssigkristallanzeige aufweist, um den im genannten Speicherbereich enthaltenen Konto aufzuzeigen.

14. Vorrichtung nach Anspruch 1, dadurch gekennzeichnet, daß der ortsfeste Teil einen Speicher (228) aufweist, der den dem beweglichen Teil zuzuführenden Code enthält und der einen Auf- und Abwärtszähler mit Vorwahl (222) steuert, so daß die für eine Adresse notwendige Zahl von Bits dem beweglichen Teil zugeführt werden kann.

15. Vorrichtung nach Anspruch 14, dadurch gekennzeichnet, daß ein Speicher (246) des beweglichen Teils Daten an die Adresse liefert, die zum Ausführen eines Vergleiches über ein Parallel/Serien-Schieberegister (245) auf den ortsfesten Teil übertragen werden.

16. Vorrichtung nach den Ansprüchen 14 oder 15, dadurch gekennzeichnet, daß der Speicher (228) des ortsfesten Teils ein ROM, EPROM oder EEPROM und der Speicher (246) des beweglichen Teils ein EEPROM ist.

FIG. 1

0 126 699

*FIG.2*

FIG. 3a

FIG. 3b

FIG. 3c

FIG. 4

FIG. 5

0 126 699

FIG. 6

5

FIG. 7

FIG. 8

FIG. 9

FIG. 10

FIG. 11

FIG. 12

FIG. 13

FIG. 14